# EUROPEAN PATENT APPLICATION

(11) **EP 4 371 780 A1**
(43) Date of publication of application: **22.05.2024**
(21) Application number: 22207392.6
(22) Date of filing: 15.11.2022
(51) Int. Cl.: B60B 27/00, F16D 51/04, F16D 55/00, F16D 61/00, B60B 21/08

(54) **FRICTION BRAKE FOR BRAKE SYSTEM OF ELECTRICALLY DRIVEN VEHICLES**

(71) Applicant: ZF CV Systems Global GmbH, 3006 Bern (CH)
(72) Inventor: FANIN, Fausto, 3008 Bern (CH); FRANK, Jochen, 67071 Ludwigshafen (DE); HUNOLD, Bernard, Friedrichshafen (DE); MENTZENDORFF, Olaf, 30989 Gehrden (DE); VAN RAEMDONCK, Gandert Marcel Rita, 3073 Muri bei Bern (CH)
(74) Representative: Ohlendorf, Henrike

(57) **Abstract**

The invention relates to a friction brake (9) for a brake system (1) of an electrically driven vehicle (100), said vehicle (100) comprising an electric machine (3), wherein the brake system (1) is configured to control the electric machine (3) so as to apply a regenerative braking force to the vehicle (100). It is suggested that the friction brake (9) comprises an annular brake body (21) that is configured to translationally move between a retracted non-braking position (R) and an extended braking position (E), wherein in the extended position (E), the annular brake body (21) is configured to frictionally engage a friction surface (35) that is provided on a wheel rim of the vehicle (100).

## Description

The invention relates to a friction brake for a brake system of an electrically driven vehicle, said vehicle comprising an electric machine, wherein the brake system is configured to control the electric machine so as to apply a regenerative braking force to the vehicle.

Brake systems of the aforementioned type are generally known in the art.

Vehicles, in particular commercial vehicles, to which this invention also relates, are increasingly equipped with electrical drive systems wherein one or more electrical machines provide drive power to the vehicle. The electrical machine is not only used to provide drive power. Oftentimes, in a regenerative mode of operation, the electrical machine is y also configured to recuperate electrical energy from the moving vehicle by acting as a generator instead of an electric motor. In this regenerative braking mode, the vehicle is decelerated by the electrical machine.

Electrical machines in vehicles have become so efficient at recovering energy and providing regenerative braking force to the wheels of the vehicle that they can cover a substantial ratio of braking events over a given timespan.

Conventional friction brakes, such as disc brakes and drum brakes, are therefore no longer needed for every braking event. They are, however, still useful to provide additional brake power for high deceleration events such as emergency braking events, and also an essential additional safety feature in case of malfunctions of the electrical machine.

While conventional disc or drum brakes are highly efficient devices that work reliably, their complexity is considered to be a potential disadvantage in terms of cost efficiency. For the above-mentioned braking scenarios where the electrical machine covers a substantial part of braking events, conventional friction brakes are considered to be overpowered and overdesigned.

Accordingly, it was an object of the invention to provide an improved friction brake for a brake system of the type mentioned hereinabove, which alleviates the disadvantages of the prior art as much as possible.

In particular, it was an object of the invention to provide a friction brake for a brake system of the type mentioned hereinabove which is more cost-efficient while still being able to reliably complement the regenerative brake performance of the brake system.

The invention achieves the object mentioned before by suggesting a friction brake as defined in claim 1. In particular, the invention suggests that the friction brake comprises an annular brake body (21) that is configured to translationally move between a retracted non-braking position and an extended braking position, wherein in the extended position, the annular brake body (21) is configured to frictionally engage a friction surface that is provided on a wheel rim of the vehicle.

The invention is based upon the realization that under current and future use cases for friction brakes, the friction brake will be used significantly less over a given timespan than in the past, which means that there will be less wear overall on the friction parts of the friction brake.

At the same time, the rim brake concept of the invention still achieves high brake performance by having the brake body (21) directly engage the wheel rim. By engaging the rim directly, the annular brake body (21) may be dimensioned to have a larger radial outer diameter than was possible with disc or drum brakes, resulting in a large friction surface area.

The rim brake design suggested by the invention can be implemented with few moving parts, leading to a mechanically simple yet still high performing brake mechanism that can be fitted to most vehicles.

The friction brake can be used alone for providing parking brake functionality or, either alone or in combination with the regenerative braking by the electrical machine, for high-deceleration braking events.

In terms of the invention, a high-deceleration braking event is understood to encompass all braking events which have a desired deceleration of 2,5 m/s² or higher. High-deceleration braking events encompass braking events that require a maximum deceleration torque of up to 30.000 Nm.

High-deceleration brake events encompass braking events which require an application time until reaching 75% of the aforementioned maximum torque of 250 ms or less. High-deceleration braking events encompass events with an energy dissipation of up to 3 MJ per brake stop. The maximum deceleration to be expected in high-deceleration braking events is estimated to be in the range of 5-7 m/s².

The translational movement of the brake body can be implemented in a cost-efficient yet effective manner. In contrast to conventional friction brakes such as disc brakes or drum brakes, no complicated multi-part actuation of mechanical elements is required. A simple push/pull mechanism is sufficient to actuate the friction brake of the invention. The actuation mechanism might for example be a pneumatic or electric actuator coupled to the annular brake body and effective to push the brake body towards the wheel rim. A return to the retracted position may for example be effected by spring load as in conventional brakes.

In a preferred embodiment, the brake body is configured to be mounted co-axially to an axle of the wheel rim to a non-rotating vehicle structure on the wheel end, such as to a chassis of the vehicle.

The brake body may preferably be shaped as a hollow sleeve or ring which extends circumferentially around the wheel axle, thus saving weight.

In a further preferred embodiment, the brake body comprises a tapered, preferably frustoconical, friction surface that is configured to engage the friction surface of the wheel rim, wherein the friction surface of the wheel rim comprises a mating tapered, preferably frustoconical, friction surface.

Preferably, the tapered friction surface of the brake body is a male conical friction surface, meaning that the outer diameter of the friction surface facing the wheel rim is smaller than the outer diameter of that portion of the friction surface which is spaced apart further from the wheel rim. Correspondingly, the mating tapered friction surface of the wheel rim would than be a female tapered friction surface.

The taper angle of the friction surfaces can be varied depending on space requirements and depending on the required surface area of the friction surface. An advantage of shaping the friction surface in conical fashion is that the surface area is significantly larger as compared to a strictly radially extending friction surface which lies in a plane perpendicular to the wheel axis.

The friction surface of the brake body preferably comprises a friction material. Preferably, the friction material is added to a base body. Further preferred, the friction material can be refurbished after being worn out, such that the brake body can optionally be reused after refurbishing. In preferred embodiments, the friction material is a
- metal alloy,
- ceramic material,
- polymer,
- composite material,
- or a combination of several of the above.

The metal alloy preferably comprises one, several or all of the following alloying elements:
- Chromium (Cr)
- Nickel (Ni)
- Molybdenum (Mo)
- Carbon (C)
- Phosphorus (P)

The ceramic material is preferably selected from the following material candidates:
- Silica-based
- Leucite-reinforced Feldspathic
- Flourmica glass
- Lithium Disilicate
- Glass-infiltrated
- Metal-oxide

The polymer friction material is preferably selected from the following:
Rubbers/Elastomers (non-exhaustive), such as
   - Natural rubber (NR)
   - Epoxidized natural rubber (ENR)
   - Polybutadiene (BR)
   - Styrene-butadiene copolymer (SBR)
   - Additives:
   - Silica
   - Black carbon
   - Sulphur; and
Polymers (high-performance, non-exhaustive), such as
   - Polysulfone (PSU)
   - Poly(ethersulfone) (PES)
   - Polyetherimide (PEI)
   - Poly(phenylene sulfide) (PPS).

The composite material is preferably a matrix type composite material selected from the following:
- Polymer Matrix Composite (PMCs),
- Metal Matrix Composite (MMCs),
- Ceramic Matrix Composite (CMCs),
- Rubber/Elastomeric, or
- Bakelite Resin.

The matrix material may preferably comprise one or more of the following additives:
Metallic additives, such as
   - Steel fibre,
   - Brass fibre,
   - Chromium,
   - Titanium powder,
   - Aluminium particles,
   - Zirconium silicate (ZrSiO4),
   - Phosphorus;
Ceramic additives, such as
   - Carbides, e.g. Silicone carbide (SiC), Boron carbide (B4C), etc.,
   - Oxides, e.g. Aluminium oxide (AI2O3), Magnesium oxide (MgO), Zinc oxide (ZnO), Zirconium dioxide (ZrO2), Silicon dioxide (SiO2), Zirconium silicate (ZrSiO4), Potassium titanate (K2TiO3), Antimony trisulfide (Sb2S3), etc.,
   - Zircon;
Carbon-based additives, such as
   - Carbon fibre
   - Graphite
   - Coke;
Organic and/or recycling additives, such as
   - Rice husk powder composite,
   - Cement bypass dust (CBPD), by-product,
   - agricultural fibre (waste) (corn, sugar cane, palm fibre) composites,
   - Coconut wood (sawdust waste),
   - Recycled plastics (as fibres);
Phosporus,
Aramid pulp, or
Rubber.

In a further preferred embodiment, the brake body is operatively coupled to a brake actuator, preferably a pneumatic brake actuator or an electromagnetic brake actuator, wherein the brake actuator is configured to move the brake body between the retracted and extended positions. In preferred embodiments, the brake actuator is configured to move the brake body from the retracted position to the extended position, wherein a return spring is configured to push the brake body back towards the retracted position.

The invention has hereinabove been described in a first aspect with respect to the friction brake itself.

In a second aspect, the invention also relates to a wheel for a braking system of an electrically driven vehicle, said vehicle comprising an electric machine that is configured to apply a regenerative braking force to the vehicle, the wheel comprising a rim.

The invention achieves the object mentioned hereinabove relating to the aforementioned wheel by suggesting that the wheel rim comprises a friction surface that is configured to frictionally engage the annular brake body of the friction brake of anyone of the preferred embodiments described hereinabove of the first aspect.

The wheel of the second aspect makes use of the same benefits as the friction brake of the first aspect.

Preferred embodiments of the friction brake of the first aspect are at the same time also preferred embodiments of the wheel of the second aspect and vice versa, which is why reference is made to the description hereinabove to avoid unnecessary repetition.

The wheel and the friction brake cooperate with one another in the same braking system.

In a preferred embodiment, the rim of the wheel comprises a first radially extending portion and a second radially extending portion adjacent to the first portion, and the friction surface is provided in the second rim portion.

Preferably, the second portion of the rim has a higher material thickness then the first portion of the rim, which improves heat dissipation at general longevity of the wheel rim, and the second rim portion in particular.

In a further preferred embodiment, the second portion of the rim is positioned radially outwards of the first portion. This allows for a larger diameter of the friction body of the friction brake, leading, again, to an increased friction surface area.

In a further preferred embodiment, the friction surface is provided directly on the second rim portion. Alternatively, the friction surface may also be provided on an attachment ring that is fixed to the second portion, preferably releasable.

The friction surface on the wheel may be a singular continuous friction surface, or alternatively be divided into a plurality of friction surface segments that are assembled on the rim in the second rim portion cross the circumference of the second rim portion.

Likewise, the friction surface on the brake body of the friction brake may be provided as a singular continuous friction surface but may also be provided as a plurality of friction segments that are distributed along the circumference of the brake body.

In a third aspect, the invention relates to a brake system for an electrically driven vehicle, said vehicle comprising an electric machine, wherein the brake system is configured to control the electric machine so as to apply a regenerative braking force to the vehicle.

The invention achieves the object mentioned initially by proposing that the brake system further comprises a friction brake according to the first aspect and/or a wheel according to the second aspect of the invention described hereinabove.

The brake system of the third aspect makes use of the same benefits as the first and second aspects of the invention. Preferred embodiments of the brake system according to the third aspect are also preferred embodiments of the first and second aspects of the invention and vice versa which is why, again, reference is made to the description hereinabove to avoid unnecessary repetition.

In a preferred embodiment, brake system comprises a control device that is operatively coupled to the electric machine and to the friction brake and configured to control the electric machine and the friction brake, wherein the control device is configured to register a brake demand signal that is representative of a desired vehicle deceleration, to control exclusively the electric machine to apply regenerative braking as long as the desired vehicle deceleration is below a predetermined threshold value, and to control either exclusively the friction brake to engage the wheel rim for friction braking, or both the electric machine and the friction brake, to apply combined regenerative and friction braking, when the desired vehicle deceleration is at or above the predetermined threshold value.

The brake demand signal is in preferred embodiments for example generated by a manual driver, such as via a brake pedal, or by a virtual driver, i.e. an autonomous or partly autonomous drive control system.

Depending on the desired vehicle deceleration, the control device is configured to transmit control signals to the electric machine and to the friction brake, effective to provide control commands for the required braking power to achieve the desired vehicle deceleration.

The threshold value mentioned hereinabove is in preferred embodiments chosen to be a threshold value indicative of a high-deceleration braking event such as emergency braking. The desired vehicle deceleration threshold d_{c} may for example be in a range of 2,5 m/s² or higher.

In a further preferred embodiment, the control device is configured to register a parking brake signal, that is representative of a desired parking brake function and to control exclusively the friction brake to engage the wheel rim for static friction as a function of the parking brake signal. The static friction is effective to maintain the vehicle in stand still while it is parked.

Thus, the inventive friction brake can still be used in a conventional manner to exert parking brake functionality in the evolving use cases which this invention relates to. The parking brake signal may in preferred embodiments for example be generated by a manual driver or a virtual driver as described hereinabove for the desired brake demand signals that are representative of desired vehicle deceleration.

In a further aspect, the invention relates to an electrically driven vehicle, in particular an electrically driven commercial vehicle, having a plurality of wheel, and at least one electrical machine that is configured to apply regenerative braking force, to one, several or all wheels of the vehicle. The invention achieves the object mentioned initially for this vehicle by suggesting that the vehicle comprises a brake system according to any one of the preferred embodiments described hereinabove.

The invention will herein after being described with reference to the accompanying drawings of a preferred embodiment. Herein:
- Fig. 1: shows a schematic signed view drawing of a commercial vehicle of a preferred embodiment and
- Fig. 2: shows a schematic detail view of a wheel of the vehicle of fig. 1.

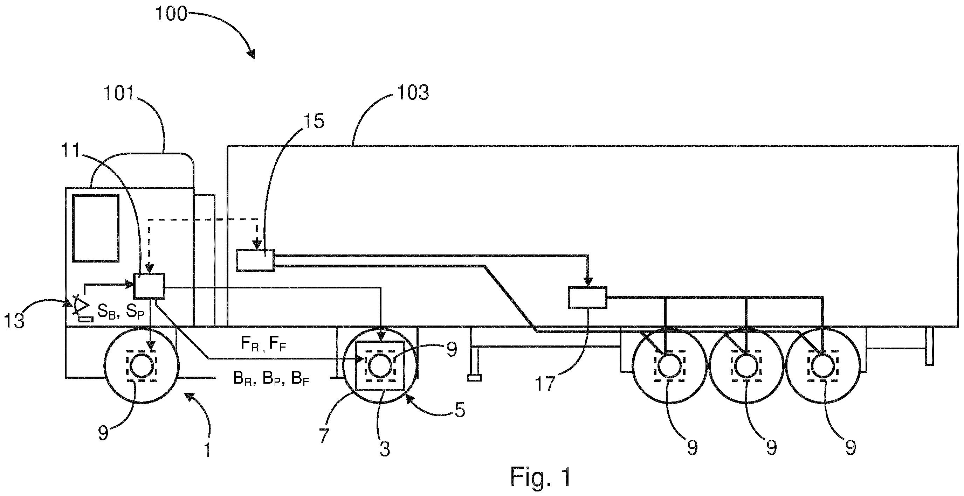

Fig. 1 illustrates exemplarily a commercial vehicle 100 having a tractor 101 and a trailer 103. Both entities are shown as one vehicle 100 but could be understood in terms of the invention also as two separate vehicles.

The tractor comprises a brake system 1 and a (first) electric machine 3 that is operatively coupled to a rear axle 5 of the tractor 101. The electrical machine 103 is depicted exemplarily as a direct drive electric machine.

The brake system 1 further comprises a brake pedal 13 which is in signal communication with the control device 11 and configured to transmit to the control device 11 a brake demand signal S_{B} that is representive of a desired vehicle deceleration.

The trailer 103 of vehicle 100 preferably also comprises a control device 15 which may exemplarily be a trailer electronic brake system (TEBS). The second control device 15 is a signal communication with a number of friction brakes 9 on the trailer 103 and configured to control friction braking of trailer 103 with these friction brakes 9 in the same manner as the first control device 11 does for the tractor 101.

Further, the second control device 15 is in signal communication with a second electric machine 17. Exemplarily, the second electric machine is operatively coupled to all three axles of trailer 103 who a drive train.

It would, however, also be within the scope of the invention if the trailer 103 comprises an individual electric machine for each axle, or an electric machine for each wheel, much like the tractor 101.

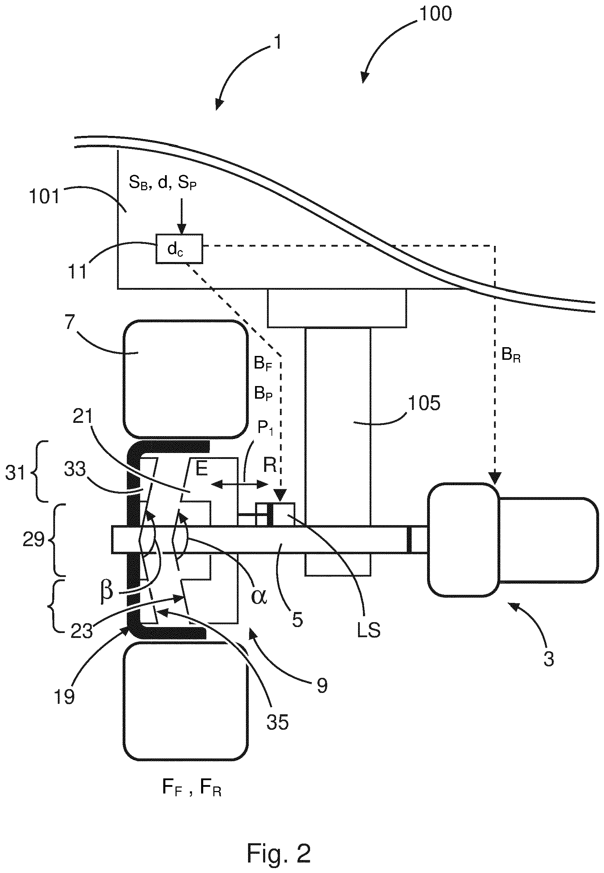

In Fig. 2, the brake system 1 is shown in more detail. In addition to the friction brake 9, the brake system 1 comprises wheel 7. The wheel 7 comprises a rim 19.

The friction brake 9 comprises a brake body 21 having a friction surface 23 which has a taper angle α. The brake body 21 is non-rotateably mounted with respect to a structure 105, in the present case a frame, of the vehicle 100 and configured to move in the direction of arrow P₁ between a retracted position R and an extended position E in linear fashion.

The friction brake 9 comprises a pneumatic actuator 25 there is configured to caused movement of the brake body 21 between the aforementioned positions E, R.

The rim 19 of wheel 7 is mounted to an axle 5 of vehicle 100 and electrically driven by the electric machine 3.

The rim 19 comprises a first radially extending rim portion 29 and a radially outer annular rim portion 31. The second, radially outer rim portion 31 comprises an attachment ring 33. The attachment ring 33 is fast and either permately all realisably to the rim 19. Alternatively, the rim 19 may also have in the second rim portion 31 merely a portion with increased material thickness.

Regardless of those variants, the second rim portion 31 comprises a friction surface 35 having a tapered shape with a taper angle β. In the preferred embodiment shown in figure 2, angles α and β are identical.

The axles 1 shown in Fig. 2 is exemplarily shown for the rear axle of tractor 101 of vehicle 100. It shall be understood that the same principal can also be implemented on the trailer 103 of Fig. 1.

In operation, exemplarily a driver of vehicle 100 provides, by pushing the brake pedal 13, a brake demand signal S_{B} to the first control device 11. The first control device 11 contains a control command B_{R} to the electric machine 3 to provide regenerative braking force if the desired vehicle deceleration d of which the brake demand signal S_{B} is representative, is below a predetermined critical threshold value dc stored in the first control device 11. If the desired vehicle deceleration d meets or exceeds the threshold dc, the first control device 11 alternatively or additionally sends a control signal B_{F} to the friction brake 9, more specifically the brake actuator 25 to provide fricitonal braking to the wheel 7.

Upon being actuated by the actuator 25, the brake body 21 moves translationally towards the extended position E where it engages which its friction surface 23 the mating friction surface 35 of the wheel 7. The wheel 7 is decelerated as a consequence thereof.

When the vehicle 100 is in standstill, and the control device 11 registers a parking brake signal S_{P}, the control device 11 transmits a control command Bp to exclusively the brake actuator 25 to actuate the brake body 21 so as to achieve static friction between the friction surfaces 23, 35 and thusly provide parking brake functionality.

As can be seen herefrom, the brake system 1 can apply both a regenerative braking force F_{R} as well as a frictional braking force F_{F} to the wheel 7 of vehicle 100, depending upon the desired deceleration d for vehicle 100. The brake mechanism requires only a small number of parts and is therefore easy to implement in practice. It is presently considered beneficial to mount the brake body 21 coaxially to the axle 27 of rim 19, but alternative arrangements which provides for translational movement of the brake body 21 would also be within the scope of the invention. For example the brake body 21 might also be mounted to a different non-rotating structure of the vehicle 100 than to present alternative to mounting it on the chassis.

### List of reference signs (Part of the description)

- 1: brake system
- 3: electric machine
- 5: axle
- 7: wheel
- 9: friction brake
- 11: (first) control device
- 13: brake pedal
- 15: (second) control device
- 17: (second) electric machine
- 19: rim
- 21: brake body
- 23: friction surface, brake body
- 25: brake actuator
- 29: first rim portion
- 31: second rim portion
- 33: attachment ring
- 35: friction surface, rim
- α, β: angle
- B_{R}: control command, regenerative braking
- B_{F}: control command, friction braking
- B_{P}: control command, parking brake
- d: desired vehicle deceleration
- d_{c}: threshold
- F_{F}: frictional braking force
- F_{R}: regenerative braking force
- S_{B}: brake demand signal
- S_{P}: parking brake signal
- E, R: position
- 100: vehicle
- 101: tractor
- 103: trailer
- 105: chassis

## Claims

1. A friction brake (9) for a brake system (1) of an electrically driven vehicle (100), said vehicle (100) comprising an electric machine (3), wherein the brake system (1) is configured to control the electric machine (3) so as to apply a regenerative braking force to the vehicle (100),
**characterized in that** the friction brake (9) comprises an annular brake body (21) that is configured to translationally move between a retracted non-braking position (R) and an extended braking position (E), wherein in the extended position (E), the annular brake body (21) is configured to frictionally engage a friction surface (35) that is provided on a wheel rim of the vehicle (100).

2. The friction brake (9) of claim 1,
**characterized in that** the brake body (21) is configured to be mounted coaxially to an axle (5) of the wheel rim (19) to a non-rotating vehicle structure (105).

3. The friction brake (9) of claim 1 or 2,
**characterized in that** the brake body (21) comprises a tapered friction surface (23) that is configured to engage the friction surface (35) of the wheel rim (19), wherein the friction surface (35) of the wheel rim (19) is matingly tapered.

4. The friction brake (9) of any one of the preceding claims,
**characterized in that** the friction surface (23) of the brake body (21) comprises a friction material.

5. The friction brake (9) of claim 4,
**characterized in that** the friction material is a
- metal alloy,
- ceramic material,
- polymer,
- composite material,
- or a combination of several of the above.

6. The friction brake (9) of any one of the preceding claims,
**characterized in that** the brake body (21) is operatively coupled to a brake actuator (25), wherein the brake actuator (25) is configured to move the brake body (21) between the retracted and extended positions (R, E).

7. A wheel (7) for a braking system of an electrically driven vehicle (100), said vehicle (100) comprising an electric machine (3) that is configured to apply a regenerative braking force (F_{R}) to the vehicle (100), the wheel (7) comprising a rim (19),
**characterized in that** the wheel rim (19) comprises a friction surface (35) that is configured to frictionally engage the annular brake body (21) of the friction brake (9) of any one of claims 1 to 6.

8. The wheel (7) of claim 7,
**characterized in that** the rim (19) comprises a first radially extending portion (29), and a second radially extending portion (31) adjacent the first portion (29), and the friction surface (35) is provided in the second rim portion (31).

9. The wheel (7) of claim 8,
wherein the second portion (31) has a higher material thickness than the first portion.

10. The wheel (7) of claim 8 or 9,
wherein the second portion (31) is positioned radially outwards of the first portion.

11. The wheel (7) of any one of claims 8 to 10,
wherein the friction surface is provided directly on the second rim portion.

12. The wheel (7) of any one of claims 8 to 10,
wherein the friction surface (35) is provided on an attachment ring (33) that is fixed to the second portion (31), preferably releasably.

13. A brake system (1) for an electrically driven vehicle (100), said vehicle (100) comprising an electric machine (3), wherein the brake system (1) is configured control the electric machine (3) so as to apply a regenerative braking force (F_{R}) to the vehicle (100),
**characterized in that** the brake system (1) further comprises a friction brake (9) according to any one of claims 1 to 6, and a wheel (7) according to any one of claims 7 to 12.

14. The brake system (1) of claim 13,
**characterized in that** the brake system (1) comprises a control device (11) that is operatively coupled to the electric machine (3) and to the friction brake (9), and configured to control the electric machine (3) and the friction brake (9), wherein the control device (11) is configured to register a brake demand signal (S_{B}) that is representative of a desired vehicle deceleration (d), and to
- control (B_{R}) exclusively the electric machine (3) to apply regenerative braking exclusively as long as the desired vehicle deceleration is below a predetermined threshold value (d_{c}), and
- control (B_{R}, B_{F}) either exclusively the friction brake (9) to engage the wheel rim (19) for friction braking, or both the electric machine (3) and the friction brake (9) to apply combined regenerative and friction braking, when the desired vehicle deceleration (d) is at or above the predetermined threshold value (dc).

15. The brake system (1) of claim 13 or 14,
wherein the control device (11) is configured to register a parking brake signal (S_{P}) that is representative of a desired parking brake function, and to
- control (B_{P}) exclusively the friction brake (9) to engage the wheel rim (19) for static friction as a function of the parking brake signal.

16. An electrically driven vehicle (100), in particular an electrically driven commercial vehicle (100), having a plurality of wheels (7), and at least one electrical machine (3) that is configured to apply regenerative braking force, to one, several or all wheels (7) of the vehicle (100),
**characterized in that** the vehicle (100) comprises a brake system (1) according to any one of claims 13 to 15.
